# EUROPÄISCHE PATENTSCHRIFT

(11) **EP 0 522 209 B1**
(45) Veröffentlichungstag und Bekanntmachung des Hinweises auf die Patenterteilung: **16.09.1998**
(21) Anmeldenummer: 91250155.8
(22) Anmeldetag: 11.06.1991
(51) Int. Cl.: C04B 28/02, C04B 20/00, C04B 28/04

(54) **Zementgebundener Baustoff**
Cement-bound building material
Matériau de construction lié par du ciment

(43) Veröffentlichungstag der Anmeldung: 13.01.1993
(73) Patentinhaber: Max Frank GmbH & Co. KG, D-94339 Leiblfing (DE)
(72) Erfinder: Kämpfer, Wolfram, O-5300 Weimar (DE); Bergner, Klaus, O-5300 Weimar (DE)
(74) Vertreter: Wasmeier, Alfons, Dipl.-Ing.

(56) Entgegenhaltungen:
- EP-A- 0 269 015
- GB-A- 1 490 783
- GB-A- 2 230 772
- US-A- 3 489 582
- US-A- 4 482 385
- US-A- 4 501 830
- CHEMICAL ABSTRACTS, vol. 107, no. 4, 27. Juli 1987, Columbus, Ohio, US; abstract no. 27578J, Seite 267 ; & JP-A-62041785 (MATSUSHITA ELECTRIC WORKS LTD) 23.02.1987

## Beschreibung

Die Erfindung bezieht sich auf ein Formteil gemäß Oberbegriff Patentanspruch 1, und dabei speziell auch auf ein Formteil aus zementgebundenem Material mit hoher Druck- und Biegefestigkeit, welches für konstruktive Bauteile, für Verkleidungselemente, für Profile im-Wohnungs-, Gesellschafts- und Industriebau sowie für Rohrleitungs- und Kanalsysteme verwendet werden kann.

In jüngster Zeit wurden höherfeste zementgebundene Baustoffe entwickelt, die ohne Zusätze eines faserigen Materials zum Zementgemenge, jedoch mit Anteilen an vernetzbaren Polymerzusätzen Festigkeitswerte erreichen, wie sie bisher nur von faserverstäkten zementgebundenen Baustoffen bekannt waren. Für derartige Baustoffe werden insbesondere polare organische Polymere auf der Basis von Vinylverbindungen dem Gemenge zugesetzt, wobei als hydraulische Bindemittel Aluminatzemente bevorzugt verwendet werden.

Im DD-WP 201 883 wird eine zementartige Zusammensetzung beschrieben, die hergestellt wird aus mindestens einem hydraulischen Zement mit einem Anmachwasseranteil von nicht mehr als 25 Masse-% der Zusammensetzung und einem organischen Polymer oder Copolymer in einem Anteil von 1 bis 15 Masse-% des in der Zusammensetzung befindlichen hydraulischen Zements.

Der vorhandene (Co)-Polymeranteil, der hinreichend wasserlöslich oder hinreichend in Wasser dispergierbar und in einem solchen Masseanteil in der Zusammensetzung vorliegen muß, der sie befähigt, zu einem plastischen Teig geformt zu werden, ermöglicht ein Strangziehen oder kann mittels einer Doppelwalzenmühle das Gemenge zu einer zusammenhängenden, kohäsiven plastischen Platte verformen. Die Anwesenheit des (Co)-Polymers soll weiterhin einen wesentlichen Einfluß auf die Biegezugfestigkeit des zementartigen Produktes ausüben, wenn sein Anteil entsprechend hoch in der Zusammensetzung ist und bevorzugt hydrolysiertes Vinylacetat - (Co)-Polymer verwendet wird. Bei dem hydraulischen Zement ist ein aluminathaltiger einzusetzen, wobei des Anteil an äquivalentem Aluminium bezogen auf die Masse des hydraulischen Zements, mehr als 30 Masse-% betragen soll.

Es werden eine Reihe geeigneter Calciumaluminat-Produkte vorgeschlagen.

Nach einem weiteren Patent, dem EP 0 038 126 werden Festigkeitssteigerungen durch Zusatz eines Feinstoffes in die bereits beschriebene Mischungszusammensetzung erreicht. Solch ein Feinstoff, der ein organischer oder anorganischer sein kann, soll eine Partikelgröße von kleiner als 0,05 mm aufweisen.

Ausführungsversuche mit diesen Mischungszusammensetzungen zeigen einen direkten Zusammenhang zwischen Festigkeit und massemäßiger Zusammensetzung auf, d.h. die hohen Festigkeiten werden durch einen hohen Polyvinylacetatgehalt erreicht und dieser benötigt wiederum einen hohen Aluminatanteil des Zementes. Die erforderliche Polyvinylacetatmenge birgt in sich sowohl verarbeitungstechnische Schwierigkeiten als auch Qualitätsmängel im hergestellten Material. Es wird eine rasche Hydratation erzeugt, die eine Wärmeentwicklung bewirkt und damit den Abbindeprozeß weiter beschleunigt. Die Folge sind sehr kurze Verarbeitungszeiten.

Der ausgehärtete Körper zeigt bei Feuchtigkeitseinwirkung Festigkeitsverluste, die verursacht werden durch den hydrophilen Charakter und die damit verbundene Quellneigung des Polymers. Infolge von Quell- und Schwinderscheinungen (Feuchteaufnahme bzw. -abgabe) entstehen Formänderungen verbunden mit Gefügespannungen, die zur Rißbildung und zum funktionellen Versagen eines Bauteils führen. Weitere erhebliche Festigkeitsminderungen verursacht der hohe Aluminatanteil. Bei Vorhandensein von Wasser und Gips oder bei Sulfatangriff, in dem gelöste Sulfate in den erhärteten Körper eindringen, bildet sich ein Hydratationsprodukt, das Ettringit. Es kommt zu Gefügespannungen, Strukturstörungen und letztlich zu Zerstörungen. Die Verwendung für konstruktive Bauteile, insbesondere für solche, die nassem oder feuchtem Medium ausgesetzt sind, ist ausgeschlossen.

Bekannt ist die Herstellung von hochwärmeleitfähigen, vakuumdichten Formteilen aus einem zementgebundenen Material auf der Basis von gießfähigen Rohmassen (US 44 82 385). Wesentlicher Bestand des bekannten Erzeugnisses ist ein hoher metallischer Zusatz aus nichtrostendem Stahl.

Bekannt ist weiterhin auch ein Fliesenkleber (GB 14 90 783), der neben Sand einer Korngröße zwischen 150 µm und 290 µm Portlandzement und Zelluloseäther enthält. Es handelt sich hierbei aber um eine zähflüssige Masse, die für die Herstellung eines Formteiles weder geeignet, noch bestimmt ist.

Aufgabe der Erfindung ist es, einen Formkörper aus zementgebundenem Material aufzeigen, der aus einer homogenen, gut formbaren Masse hergestellt werden kann und auch im Langzeiteinsatz formbeständig, mechanisch, thermisch und unter Feuchtigkeit hoch belastbar ist.

Zur losung dieser Aufgabe ist ein Formkörper entsprechend dem kennzeichnenden Teil des Patentanspruches 1 ausgebildet. Als hydraulisches Bindesmittel ist ein Portlandzement mit einem C₃A-Anteil von 9 bis 30 Masseteilen einzusetzen . Die spezifische Oberfläche das Zements soll dabei nicht größer als 3200 cm²/g betragen.

Als feindisperser Zusatzstoff können Gesteinsmehle mit einem sehr hohen Feinheitsgrad, feiner als der des Bindemittelanteils, beispielsweise Schiefermehl, Kreide, Kalksteinmehl, Quarzmehl, aber auch Filteraschen, wie Braunkohlen- oder Steinkohlen-Flugasche, Siliziumfilterstaub sowie Mehle von Schwerspat, Talkum, Betoniten, Lehm und Tonen ausgewählt werden.

Zu den Körnungsbereichen des hydraulischen Bindemittels und des feindispersen Zusatzstoffes kommt im Kornaufbau ein Körnungsbereich aus naturgerundeten und/oder gebrochenen Feinzuschlägen mit einer Körnungsverteilung nicht größer als 2 mm Korngröße hinzu. Als sehr günstig erweist sich ein Feinzuschlag, von dessen Gesamtmenge 80 % eine Korngröße kleiner als 0,5 mm aufweisen.

Hochsiliziumhaltige Feinzuschläge zeigen sich als sehr wirkungsreich.

Als plastifizierende Zusastzmittel werden dem Baustoffgemenge wässrige Dispersionen von Polyvinylalkoholen niedriger Viskosität oder Celluloseether, insbesondere feine pulverförmige Methylcellulose zügegeben werden.

Die Wahl der Körnungsbereiche mit einem Kornmedian

| | |
|---|---|
| - feindisperser Zusatzstoff | < 10 µm |
| - Zementteilchen | 15 ... 40 µm |
| - Feinzuschlag | 200 ...500 µm |

erweist sich als eine günstige Kombination, die eine sehr geringe Haufwerkporigkeit erzeugt. Die Bindungskräfte des feindispersen Zusatzstoffes zu den Zementteilchen und wiederum die Bindungskräfte der Zementteilchen zum Feinzuschlag sind so groß, daß der Homogenisierungsprozeß der Gemengebestandteile in bekannten Mischern ohne Schwierigkeiten durchgeführt werden kann und sich überraschend eine hohe Plastizität aufbaut, die ein leichtes qualitätsgerechtes Verarbeiten, sowohl mittels Walzen als auch im Strangpreß- und Stempelpreßverfahren, möglich macht.

Die neue Zusammensetzung enthält nur noch eine geringe Menge an polymeren Plastifizierungsmitteln, wodurch die Quellneigung im Baustoff vernachlässigbar klein ist. Auch die hydrophile Wirkung ist ausgeschaltet, so daß mit diesem Baustoff eine endgültige Festigkeitsstabilisierung eingetreten ist.

Mikroskopische Untersuchungen zeigten, daß die Polymeren mit dem C₃A-Anteil im Zement komplex verbunden sind. Damit können die Nachteile der Ettringitbildung ausgeschlossen werden.

Stranggepreßte Formteile erhalten eine ausgezeichnete Grünstandsfestigkeit und ein kompaktes rissefreies Gefüge. Ein kurzzeitiges Erwärmen bei Temperaturen bis 90°C in feuchter Atmosphäre wirkt festigkeitsstabilisierend.

Je nach Verwendungszweck des Baustoffes können dem Baustoffgemenge Füll- und/oder Faserzusätze beigegeben werden, womit insbesondere die Zähigkeit des Baustoffes in Form verbesserter Bruchde hnung erhöht wird.

In den folgenden Beispielen soll die Festigkeitsbildung des erfindungsgemäßen Baustoffes an druckgeformten Zementprofilen für Abdeckleisten, Distanzstücke, Durchführungen, Kabelschächte, Leitungselemente, Träger, Dachsteine, Rohre und Wandpanele näher erläutert werden.

In den Beispielen 1 bis 8 wird ein vorgemischtes Trockengemenge aus einem Portlandzement mit einen C₃A-Anteil von 8,3 % sowie einer spezifischen Oberfläche von 3680 cm² /g nach Blaine und einem Mikrosiliziumdioxidstaub mit einem SiO₂-Gehalt von 92 % einer wässrigen Polymerdispersion zugesetzt und in einem Knet- und Walzaggregat so lange gemischt, bis eine plastische, kohäsive Masse entsteht. Die Zugabe des Zusatzmittels in Pulverform erfolgt bereits zum Trockengemenge.

Zur Überprüfung der Strangformfähigkeit wird der erforderliche Schubspannungsanlaßwert und der Fließpredruck in einem Kapillarrheometer bestimmt. Die Arbeitsmassen gelten dann als formfähig, wenn der Fließpreßdruck unter 4 MN/m² liegt.

Die rißfreie Ausformung der Prüfkörper des Querschnittes 15 x 25 mm² erfolgt mittels Vakuumstrangpresse bei einem mittleren Fließpreßdruck von 0,5 bis 1,5 MN/m².

| Masseanteile in % | | | | | | | | |
|---|---|---|---|---|---|---|---|---|
| Beispiel | 1 | 2 | 3 | 4 | 5 | 6 | 7 | 8 |
| OPC¹⁾ | 65,1 | 71,2 | 69,2 | 68,0 | 70,4 | 70,9 | 71,1 | 71,3 |
| MS²⁾ | 13,0 | 14,2 | 13,8 | 13,6 | 14,1 | 14,2 | 14,2 | 14,4 |
| Polymer | 8,1³⁾ | 0,35⁴⁾ | 3,8⁵⁾ | 5,4 ⁵⁾ | 2,1⁶⁾ | 1,4⁶⁾ | 0,5⁷⁾ | 0,21⁸⁾ |
| Wasserbindemittelwert | 0,175 | 0,165 | 0,155 | 0,155 | 0,155 | 0,155 | 0,165 | 0,165 |

| | | | | | | | | |
|---|---|---|---|---|---|---|---|---|
| 1) OPC - handelsüblicher Portlandzement | | | | | | | | |
| 2) MS - Microsilica | | | | | | | | |
| 3) Acrylat-Styren-(Co)polymer mit einem Feststoffgehalt von 47 % | | | | | | | | |
| 4) Polyacrylamid | | | | | | | | |
| 5) Polyvinylalkohol (zugesetzt als Pulver) | | | | | | | | |
| 6) Polyvinylalkohol als 15 %ige Lösung, Hydrolysegrad 88 % Viskosität der 4 %igen Lösung 10 cP | | | | | | | | |
| 7) Methylcellulose MC 15 000 | | | | | | | | |
| 8) Hydroxymethylethylcellulose HMEC 4000 | | | | | | | | |

Zur Vermeidung von Schwindrissen werden die Profilteille nach dem Extrudieren über einen Zeitraum von mindestens 12 Stunden gelagert. Nach einer Erhärtungsdauer von 18 Stunden (Wärmebehandlung) bzw. 28 Tagen Normalerhärtung weisen die Profilteile folgende Festigkeitswerte in N/mm² auf:

| Beispiel | 1 | 2 | 3 | 4 | 5 | 6 | 7 | 8 |
|---|---|---|---|---|---|---|---|---|
| Druckfestigkeit R_{d28}9) | 73 | 82 | 102 | 92 | 126 | 120 | 94 | 90 |
| Biegefestigkeit R_{bzWB}10) | 14,1 | 14,8 | 21,8 | 20,7 | 23,8 | 21,5 | 18,7 | 18,0 |
| Beigefestigkeit R_{bz28}11) | 15,7 | 18,7 | 24,7 | 23,8 | 24,8 | 25,7 | 18,8 | 20,1 |

| | | | | | | | | |
|---|---|---|---|---|---|---|---|---|
| 9) 28 Tage-Druckfestigkeit (Normallagerung) an Prüfkörpern 15 x 25 x 40 mm³ | | | | | | | | |
| 10) 18-Stunden-Biegefestigkeit (Wärmebehandlung 4 Stunden bei 65°C in feucht-gesättigter Luft) an Prüfkörpern 15 x 25 x 200 mm³ | | | | | | | | |
| 11) 28-Tage-Biegefestigkeit (Normallagerung) an Prüfkörpern 15 x 25 x 200 mm³ | | | | | | | | |

Zur Bestimmung der Dauerbeständigkeit nach dem Zeitraffer - prüfverfahren werden die Profilteile der Beispiele 1 bis 8 nach einer Erhärtungsdauer von 28 Tagen einer Wechselklimabeanspruchung durch 6stündige Lagerung in Wasser bis 60°C und anschließender 6stündiger Trocknung ausgesetzt (Biegefestigkeitswerte in N/mm²):

| Beispiel | 1 | 2 | 3 | 4 | 5 | 6 | 7 | 8 |
|---|---|---|---|---|---|---|---|---|
| 25 Wechselzyklen | 13,8 | 15,1 | n.b.¹²⁾ | 6,5 | 14,6 | 16,8 | 16,2 | 17,8 |
| 100 Wechselzyklen | 10,7 | 11,7 | n.b.¹²⁾ | n.b.¹²⁾ | 12,3 | 14,3 | 14,4 | 15,7 |

| | | | | | | | | |
|---|---|---|---|---|---|---|---|---|
| 12) nicht bestimmbar, da Prüfkörper zerfällt. | | | | | | | | |

In den nachfolgenden Beispielen 9 bis 12 wird ein vorgemischtes Trockengemenge aus einem Portlandzement mit einem C₃A-Gehalt von 11,8 % sowie einer spezifischen Oberfläche von 2650 cm²/g nach Blaine wie in den vorangegangenen Beispielen mit einer wässrigen Polymerdispersion intensiv gemischt und mittels Vakuumstrangpresse Profilteile hergestellt.

| Masseteile in % | | | | |
|---|---|---|---|---|
| Beispiel | 9 | 10 | 11 | 12 |
| OPC | 68,0 | 70,4 | 70,9 | 71,3 |
| MS | 13,6 | 14,1 | 14,2 | 14,3 |
| Polymer | 5,4⁵⁾ | 2,1⁶⁾ | 1,4⁶⁾ | 0,21⁸⁾ |
| Wasserbindemittelwert | 0,155 | 0,155 | 0,155 | 0,165 |

| | | | | |
|---|---|---|---|---|
| 5) Polyvinylalkohol (zugesetzt als Pulver) | | | | |
| 6) Polyvinylalkohol als 15 %ige Lösung, Hydrolysegrad 88 % Viskosität der 4 %igen Lösung 10 cP | | | | |
| 8) Hydroxymethylethylcellulose HMEC 4000 | | | | |

Die Profilteile werden wie in den vorangegangenen Beispielen einer Wärmebehandlung bzw. einer Normalerhärtung unterzogen und die Festigkeitswerte in N/mm² bestimmt:

| Beispiel | 9 | 10 | 11 | 12 |
|---|---|---|---|---|
| Druckfestigkeit R_{d28}9) | 128 | 166 | 138 | 108 |
| Biegefestigkeit R_{bzWB}10) | 28,7 | 34,5 | 26,1 | 21,3 |
| Biegefestigkeit R_{bz28}11) | 25,7 | 36,5 | 30,6 | 22,8 |

| | | | | |
|---|---|---|---|---|
| 9) 28 Tage-Druckfestigkeit (Normallagerung) an Prüfkörpern 15 x 25 x 40 mm³ | | | | |
| 10) 18-Stunden-Biegefestigkeit (Wärmebehandlung 4 Stunden bei 65°C in feucht-gesättigter Luft) an Prüfkörpern 15 x 25 x 200 mm³ | | | | |
| 11) 28-Tage-Biegefestigkeit (Normallagerung) an Prüfkörpern 15 x 25 x 200 mm³ | | | | |

Nach Klimawechselbeanspruchung wie im Beispiel 1 bis 8 beschrieben, werden folgende Biegefestigkeiten in N/mm² bestimmt:

| Beispiel | 9 | 10 | 11 | 12 |
|---|---|---|---|---|
| 25 Wechselzyklen | n.b.¹²⁾ | 22,1 | 18,8 | 17,3 |
| 100 Wechselzyklen | n.b.¹²⁾ | 23,4 | 17,7 | 15,1 |

| | | | | |
|---|---|---|---|---|
| 12) nicht bestimmbar, da Prüfkörper zerfällt. | | | | |

In den nachfolgenden Beispielen 13 bis 17 wird ein vorhomogenisiertes Trockengemenge aus einem Portlandzement mit einem C₃A-Anteil von 11,8 % sowie einer spezifischen Oberfläche von 2650 cm²/g nach Blaine und einem feindispersen Zusatzstoff mit einer wässrigen Polymerdispersion, wie im Beispiel 1 bis 8 angegeben, intensiv gemischt und anschließend stranggeformt.

| Masseteile in % | | | | | |
|---|---|---|---|---|---|
| Beispiel | 13 | 14 | 15 | 16 | 17 |
| OPC | 73,0 | 71,9 | 70,0 | 69,4 | 78,1 |
| Zusatzstoff | 8,8¹³⁾ | 10,8¹⁴⁾ | 10,5¹⁵⁾ | 10,4¹⁶⁾ | 4,7¹⁷⁾ |
| Polymer⁶⁾ | 2,2 | 2,1 | 2,1 | 2,1 | 2,3 |
| Wasserbindemittelwert | 0,196 | 0,183 | 0,217 | 0,226 | 0,179 |

| | | | | | |
|---|---|---|---|---|---|
| 6) Polyvinylalkohol als 15 %ige Lösung, Hydrolysegrad 88 % Viskosität der 4 %igen Lösung 10 cP | | | | | |
| 13) Kalksteinmehl mit einem Kornmedian von 5 µm | | | | | |
| 14) Quarzmehl mit einem Kornmedian von 8 µm | | | | | |
| 15) Braunkohlenflugasche (aufgemahlen) mit einem Kornmedian von 8 µm | | | | | |
| 16) Schiefermehl mit einem Kornmedian von 6 µm | | | | | |
| 17) illitischer Ton mit einem Kornmedian von 0,5 µm | | | | | |

Die Profilteile werden wie in den vorangegangenen Beispielen zunächst einer Wärmebehandlung bzw. einer Normalerhärtung und anschließend einer Klimawechselbeanspruchung unterzogen. Es werden folgende Festigkeitswerte in N/mm² ermittelt:

| Beispiel | 13 | 14 | 15 | 16 | 17 |
|---|---|---|---|---|---|
| Druckfestigkeit R_{d28}9) | 118 | 157 | 114 | 127 | 110 |
| Biegefestigkeit R_{bzWB}10) | 22,1 | 28,4 | 18,3 | 21,9 | 18,9 |
| Biegefestigkeit R_{bz 28}11) | 23,7 | 32,1 | 17,3 | 23,1 | 16,9 |
| 25 Wechselzyklen | 18,4 | 26,1 | 13,5 | 18,4 | 15,1 |
| 100 Wechselzyklen | 15,1 | 24,8 | 10,8 | 19,3 | 12,3 |

| | | | | | |
|---|---|---|---|---|---|
| 9) 28 Tage-Druckfestigkeit (Normallagerung) an Prüfkörpern 15 x 25 x 40 mm³ | | | | | |
| 10) 18-Stunden-Biegefestigkeit (Wärmebehandlung 4 Stunden bei 65°C in feucht-gesättigter Luft) an Prüfkörpern 15 x 25 x 200 mm³ | | | | | |
| 11) 28-Tage-Biegefestigkeit (Normallagerung) an Prüfkörpern 15 x 25 x 200 mm³ | | | | | |

An Hand der Beispiele 18 bis 22 soll der Einfluß von Feinzuschlägen auf die Festigkeitsbildung und Festigkeitsstabilisierung gezeigt werden. Es wird zu einem vorgemischten Trockengemenge, bestehend aus einem Portlandzement mit einem C₃A-Gehalt von 11,8 % sowie einer spezifischen Oberfläche von 2650 cm²/g nach Blaine und einem Microsiliziumdioxidstaub mit einem SiO₂-Gehalt von 92 %, ein Feinzuschlag zugesetzt und intensiv homogenisiert. Anschließen-d erfolgt im Knet- und Walzprozeß das Einbringen der Polymerdispersion (pulverförmige Zusatzmittel werden bereits dem Trockengemenge zugegeben und darin homogenisiert). Die Aufbereitung ist so lange fortzusetzen, bis eine plastische - bildsame Masse entsteht.

| Beispiel | 18 | 19 | 20 | 21 | 22 |
|---|---|---|---|---|---|
| OPC | 46,7 | 70,4 | 47,4 | 40,2 | 33,0 |
| MS | 9,3 | 14,1 | 9,5 | 8,0 | 6,6 |
| Feinzuschlag | 32,7¹⁸⁾ | - | 31,8¹⁹⁾ | 40,2¹⁹⁾ | 49,5¹⁹⁾ |
| Polymer⁶⁾ | 1,4 | 2,1 | 1,4 | 1,2 | 1,0 |
| Wasserbindemittelwert | 0,175 | 0,155 | 0,175 | 0,217 | 0,250 |

| | | | | | |
|---|---|---|---|---|---|
| 6) Polyvinylalkohol als 15 %ige Lösung, Hydrolysegrad 88 % Viskosität der 4 %igen Lösung 10 cP | | | | | |
| 18) Quarzsand 0/1, davon 65 % kleiner 0,5 mm | | | | | |
| 19) Quarzsand 0/1, davon 91 % kleiner 0,5 mm | | | | | |

Die Profilteile werden zum Zwecke der Überprüfung der Festigkeitsstabilität zunächst einer Wärmebehandlung bzw. einer Normallagerung unterzogen und anschließend einer Klimawechselbeanspruchung sowie einer Wasserlagerung unterworfen.

Die entsprechenden Festigkeitswerte sind in N/mm² angegeben:

| Beispiel | 18 | 19 | 20 | 21 | 22 |
|---|---|---|---|---|---|
| Druckfestigkeit R_{d28}9) | 126 | | 149 | 132 | 124 |
| Biegefestigkeit R_{bzWB}10) | 23,9 | | 25,2 | 22,7 | 21,8 |
| Biegefestigkeit R_{bz28}11) | 23,8 | | 28,8 | 26,3 | 24,2 |
| Biegefestigkeit R_{bz28W}20) | 21,7 | | 23,9 | 24,2 | 25,7 |
| 25 Wechselzyklen | 25,3 | | 30,7 | 25,1 | 23,8 |
| 100 Wechselzyklen | 21,8 | | 24,3 | 23,7 | 25,1 |

| | | | | | |
|---|---|---|---|---|---|
| 9) 28 Tage-Druckfestigkeit (Normallagerung) an Prüfkörpern 15 x 25 x 40 mm³ | | | | | |
| 10) 18-Stunden-Biegefestigkeit (Wärmebehandlung 4 Stunden bei 65°C in feucht-gesättigter Luft) an Prüfkörpern 15 x 25 x 200 mm³ | | | | | |
| 11) 28-Tage-Biegefestigkeit (Normallagerung) an Prüfkörpern 15 x 25 x 200 mm³ | | | | | |
| 20) 28-Tage-Biegefestigkeit nach 7 Tagen Normallagerung und anschließend 21 Tagen Wasserlagerung | | | | | |

Nachfolgend soll die Verbesserung der Bruchzähigkeit an Hand der Bruchdehnung des erfindungsgemäßen Baustoffes verdeutlicht werden. Dazu werden verschiedene Faser- und Füllstoffe sowie Polymerdispersionen den in den Beispielen 9 bis 12 aufgeführten Baustoffzusammensetzungen zugegeben:

| Beispiel | 23 | 24 | 25 | 26 | 27 |
|---|---|---|---|---|---|
| OPC | 55,9 | 66,7 | 69,9 | 69,9 | 71,2 |
| MS | 11,2 | 13,3 | 14,0 | 14,0 | 14,2 |
| Polymer⁶⁾ | 1,7 | 0,7 | 1,4 | 1,4 | 1,4 |
| Modifikator | - | 3,3²²⁾ | - | - | - |
| Faser/Füllstoff | 11,2²¹⁾ | - | 0,7²³⁾ | 0,7²⁴⁾ | 0,35²⁵⁾ |
| Wasserbindemittelwert | 0,30 | 0,20 | 0,165 | 0,165 | 0,150 |

| | | | | | |
|---|---|---|---|---|---|
| 6) Polyvinylalkohol als 15 %ige Lösung, Hydrolysegrad 88 % Viskosität der 4 %igen Lösung 10 cP | | | | | |
| 21) Holzspäne | | | | | |
| 22) Polyvinylacetat (redispergierbares Polymerpulver) | | | | | |
| 23) Steinwollefaser HBK | | | | | |
| 24) PAN-Faser DOLANIT | | | | | |
| 25) Holzdefibratorfaserstoff | | | | | |

Nach einer Erhärtungszeit von 18 Stunden (Wärmebehandlung) bzw. 28 Tagen (Normalerhärtung) weisen die Profilteile folgende Festigkeits- und Formänderungskennwerte auf:

| Beispiel | 23 | 24 | 25 | 26 | 27 |
|---|---|---|---|---|---|
| Biegefestigkeit R_{bzWB} in N/mm² ¹⁰⁾ | 16,3 | 21,8 | 27,8 | 21,3 | 20,4 |
| Biegefestigkeit R_{bz28} in N/mm² ¹¹⁾ | 14,7 | 24,7 | 26,8 | 23,1 | 16,3 |
| Bruchdehnung _{B} in %. ²⁶⁾ | 0,9 | 1,8 | 1,4 | 1,8 | 0,9 |

| | | | | | |
|---|---|---|---|---|---|
| 10) 18-Stunden-Biegefestigkeit (Wärmebehandlung 4 Stunden bei 65°C in feucht-gesättigter Luft) an Prüfkörpern 15 x 25 x 200 mm³ | | | | | |
| 11) 28-Tage-Biegefestigkeit (Normallagerung) an Prüfkörpern 15 x 25 x 200 mm³ | | | | | |
| 26) Randfaserdehnung an Prüfkörpern 15 x 25 x 200 mm³ ermittelt im 3-PB-Test nach ASTM-Standard | | | | | |

Im Beispiel 28 soll die Festigkeitsbildung des erfindungsgemäßen Baustoffes nach einer Verdichtung und Formgebung in einem Doppelwalzwerk beschrieben werden. Dazu wird die im Beispiel 10 verwendete Baustoffmischung jedoch bei einem Wasserbindemittelwert von 0,145 zunächst in einem Zwangsmischer (Firma Eirich) vorhomogenisiert und anschließend einem Walzeninnenmischer (Firma Werner und Pfleiderer) intensiv gemischt.

Zur Ausformung wird die plastische Arbeitsmasse einem Walzwerk mit einer Spaltweite von 6 mm zugegeben und zu Platten der Abmessungen 6 x 25 x 120 mm³ zugeschnitten. Die nach einer Wärmebehandlung bei 65° C in feucht-gesättigter Luft ausgehärteten Prüfkörper weisen eine Biegefestigkeit von 36,2 N/mm² auf.

In den Beispielen 29 und 30 soll die Festigkeitsbildung des erfindungsgemäßen Baustoffes nach dem für die Betondachsteinherstellung typischen Walzenpreßverfahren näher erläutert werden. Dazu werden einem vorgemischten Trockengemenge aus einem Portlandzement mit erhöhtem C₃A-Gehalt und einem Mikrosiliziumdioxidstaub mit einem SiO₂-Gehalt von 92 % Zuschläge in Form von Feinsand 0/1 und Brechsand 0/4 zugesetzt. Dem entstehenden homogenen Zuschlag-Bindemittel-Gemisch wird eine wässrige Polymerdispersion zugegeben und im Zwangsmischer mit Verwirbler so lange gemischt bis eine erdfeuchte, steifplastische Masse entsteht. Die nachfolgende Tabelle zeigt die massemäßige Zusammensetzung der Beispiele 29 und 30:

| Masseteile in % | | |
|---|---|---|
| Beispiel | 29 | 30 |
| OPC | 20,6 | 20,5 |
| MS | 4,1 | 4,1 |
| Polymer⁶⁾ | 0,2 | 0,4 |
| Verflüssiger²⁷⁾ | 0,2 | 0,2 |
| Feinsand 0/1 | 47,9 | 47,7 |
| Brechsand 0/4 | 20,6 | 20,5 |
| Wasserbindemittelwert | 0,265 | 0,265 |

| | | |
|---|---|---|
| 6) Polyvinylalkohol als 15 %ige Lösung, Hydrolysegrad 88 % Viskosität der 4 %igen Lösung 10 cP | | |
| 27) Verflüssiger auf der Basis eines Melaminharzes | | |

Das in den vorangegangenen Beispielen 29 und 30 erläuterte erfindungsgemäße Baustoffgemenge wird in einem Walzenextruder zu Betondachsteinen (Format Doppelrömer) verdichtet und ausgeformt. Die Betondachsteine wurden anschließend einer Wärmebehandlung (6 Stunden bei 55° C) ausgesetzt. Zur Prüfung von Baustoffwerten werden aus diesen ebene Platten herausgeschnitten. Diese weisen folgende Festigkeitswerte in N/mm² auf:

| Beispiel | 29 | 30 |
|---|---|---|
| Biegefestigkeit R_{bzWB}10) | 14,2 | 15,8 |
| Biegefestigkeit R_{bzWB 28}28) | 15,7 | 17,8 |

| | | |
|---|---|---|
| 10) 18-Stunden-Biegefestigkeit (Wärmebehandlung 4 Stunden bei 65°C in feucht-gesättigter Luft) an Prüfkörpern 15 x 25 x 200 mm³ | | |

Die Bruchlasten, geprüft nach DIN 1115, weisen gegenüber herkömmlichen Betondachsteinen um 56 % bzw 68 % höhere Werte auf.

## Patentansprüche

1. Formteil, hergestellt aus einer Masse, die Portlandzement mit C3A-Anteil als hydraulisches Bindemittel, einen feindispersen Zusatzstoff, ein plasitfizierendes Zusatzmittel und einen Feinzuschlag enthält, **dadurch gekennzeichnet**, daß für die Herstellung des Formteils durch Walzen oder im Strangpreß- oder Stempelpreßverfahren als plastifizierendes Zusatzmittel dem ungehärteten Baustoff eine wässrige Dispersion von Polyvinylalkoholen niedriger Viskosität oder ein Celluloseäther zugesetzt sind, und daß der zementgebundene Baustoff
16 - 80 Massenanteile Portlandzement,
1 - 21 Massenanteile des feindispersen Zusatzstoffes mit einem Kornmedian kleiner 10 µm,
0,03 - 2 Massenanteile des plastifizierenden Zusatzmittels,
0,3 - 70 Massenanteile des Feinzuschlages mit einem Kornmedian von 200 - 500 µm,
3 - 18 Massenanteile Anmachwasser
aufweist.

2. Formteil nach Anspruch 1, dadurch gekennzeichnet, daß der feindisperse Zusatzstoff ausgewählt ist aus:
Gesteinsmehlen, wie Schiefermehl, Kreide, Kaksteinmehl, Quarzmehl, Filteraschen, wie Braunkohlen oder Steinkohlen-Flugaschen
Siliziumfilterstaub
Schwerspat
Talkum
Bentoniten
Lehm
Ton.

3. Formteil nach Anspruch 1 oder 2, dadurch gekennzeichnet, daß die zementgebundene Masse auch Füll- oder Faserzusätze der Gruppe
Holzdefibratorfaserstoff
Steinwollefasern
Kunstoff-Fasern
enthält.

4. Formteil nach einem der vorhergehenden Ansprüche, dadurch gekennzeichnet, daß dem ungehärteten Baustoff pulverförmige Methylcellulose mit hohem Feinheitsgrad zügesetzt ist.

5. Formteil nach einem der vorhergehenden Ansprüche, dadurch gekennzeichnet, daß naturgerundete und/oder gebrochene Feinzuschläge, insbesondere hochsiliziumhaltige Feinzuschläge mit einer Größenverteilung nicht größer als 2 mm Korngröße enthalten sind, vorzugsweise mindestens 80% des Gesamtfeinzuschlages eine Korngröße von kleiner 0,5 mm aufweisen.

6. Formteil nach einem der vorhergehenden Ansprüche, dadurch gekennzeichnet, daß der Portlandzement einen C₃A Anteil von 9 - 30 Massenanteilen aufweist, und daß die spezifische Oberfläche des Zements nicht größer als 3 200 cm²/g ist.

7. Formteil nach einem der vorhergehenden Ansprüche, dadurch gekennzeichnet, daß es kurzzeitig thermisch bis 90° C in feuchter Atmosphäre behandelt ist.

8. Formteil nach einem der vorhergehenden Ansprüche, dadurch gekennzeichnet, daß der feindisperse Zusatzstoff eine Korngröße kleiner 10 µm, der Portlandzement bzw. dessen Partikel eine Korngröße in der Größenordnung von 15 - 40 µm aufweisen.

## Claims

1. Preform manufactured from a compound which contains Portland cement with a C3A fraction as the hydraulic binder, a finely dispersed additive, a plasticising reagent and a fine aggregate, characterised in that, for the purpose of manufacturing the preform by rolling or by the extrusion or stamp-pressing methods, there is added to the unhardened building material, as the plasticising reagent, an aqueous dispersion of polyvinyl alcohols of low viscosity or a cellulose ether, and that the cement-bonded building material has:
16 - 80 fractions by mass of Portland cement,
1 - 21 fractions by mass of the finely dispersed additive with a grain median smaller than 10 µm,
0.03 - 2 fractions by mass of the plasticising reagent,
0.3 - 70 fractions by mass of the fine aggregate with a grain median of 200 - 500 µm,
and
3 - 18 fractions by mass of mixing water.

2. Preform according to claim 1 , characterised in that the finely dispersed additive is selected from:
ground rocks, such as ground slate, chalk, ground limestone, ground quartz, filter ashes such as ignite or coal fly ashes,
silicon filter dust,
heavy spar,
talc,
bentonites,
loam, or
clay.

3. Preform according to claim 1 or 2, characterised in that the cement-bonded compound also contains filling or fibrous additives belonging to the following group:
fibrous material from wood defibration installations,
rock-wool fibres, or
plastic fibres.

4. Preform according to one of the preceding claims, characterised in that pulverised methyl cellulose having a high degree of fineness is added to the unhardened building material.

5. Preform according to one of the preceding claims, characterised in that naturally rounded and/or crushed fine aggregates, particularly fine aggregates having a high silicon content and a size distribution not exceeding a grain size of 2 mm, are contained therein, and at least 80% of the total fine aggregate preferably has a grain size of less than 0.5 mm.

6. Preform according to one of the preceding claims, characterised in that the Portland cement has a CA3 fraction of 9 - 30 fractions by mass, and that the specific surface of the cement is not greater than 3,200 cm²/g.

7. Preform according to one of the preceding claims, characterised in that it is briefly heat-treated to 90°C in a moist atmosphere.

8. Preform according to one of the preceding claims, characterised in that the finely dispersed additive substance has a grain size smaller than 10 µm and the Portland cement or its particles has a grain size of the order of 15 - 40 µm.

## Revendications

1. Pièce usinée fabriquée à partir d'un mélange composé de ciment Portland à fines de type C3A comme liant hydraulique, d'un additif à fine dispersion, d'un adjuvant plastifiant et d'un granulat à grains fins, caractérisé en ce que pour la fabrication de la pièce usinée par laminage ou par extrusion ou matriçage, on ajoute comme adjuvant plastifiant une dispersion aqueuse d'alcool polyvinylique de faible viscosité ou un éther cellulosique au matériau non durci, et en ce que le matériau lié par du ciment présente
18 à 80 parties en poids de ciment Portland
1 à 21 parties en poids d'additif à fine dispersion d'une granulométrie inférieure à 10 µm,
0,03 à 2 parties en poids d'adjuvant plastifiant,
0,3 à 70 parties en poids de granulat à grains fins d'une granulométrie comprise entre 200 et 500 µm, et
3 à 18 parties en poids d'eau à gâcher.

2. Pièce usinée suivant la revendication 1, caractérisée en ce que l'additif à fine dispersion est choisi parmi les roches pulvérisées telles que le schiste en poudre, la craie, la poudre de calcaire, la poudre de quartz; les cendres filtrantes telles que le lignite ou les cendres volantes de houille; le poussière filtrante de silicium; la barytine; la stéatite; la bentonite; le limon et l'argile.

3. Pièce usinée suivant la revendication 1 ou 2, caractérisée en ce que le matériau lié par du ciment contient également des adjuvants de charge ou des adjuvants fibreux du groupe des matières fibreuses du défibrage du bois, des fibres de laine minérale et des fibres synthétiques.

4. Pièce usinée suivant l'une quelconque des revendications précédentes, caractérisée en ce qu'on ajoute au matériau non durci de la méthylcellulose pulvérulente à haut degré de finesse.

5. Pièce usinée suivant l'une quelconque des revendications précédentes, caractérisée en ce qu'elle contient des granulats à grains fins arrondis naturellement et/ou broyés, en particulier des granulats à grains fins à haute teneur en silicium avec une distribution dimensionnelle ne dépassant pas une granulométrie de 2 mm, au moins 80% de l'ensemble des granulats à grains fins présentant de préférence une granulométrie inférieure à 0,5 mm.

6. Pièce usinée suivant l'une quelconque des revendications précédentes, caractérisée en ce que le ciment Portland présente 9 à 30 parties en poids de fines de type CA3 et en ce que la surface spécifique du ciment ne dépasse pas 3200 cm²/g.

7. Pièce usinée suivant l'une quelconque des revendications précédentes, caractérisée en ce qu'elle est traitée thermiquement jusqu'à 90°C pendant une courte durée et dans une atmosphère humide.

8. Pièce usinée suivant l'une quelconque des revendications précédentes, caractérisée en ce que l'additif à fine dispersion présente une granulométrie inférieure à 10 µm et le ciment Portland, respectivement ses particules, une granulométrie de l'ordre de 15 à 40 µm.
